# EUROPÄISCHE PATENTSCHRIFT

(11) **EP 1 418 320 B1**
(45) Veröffentlichungstag und Bekanntmachung des Hinweises auf die Patenterteilung: **30.12.2009**
(21) Anmeldenummer: 03020887.0
(22) Anmeldetag: 15.09.2003
(51) Int. Cl.: F02C 7/18, F01D 5/08, F01D 9/06

(54) **Gasturbine**
Gas turbine
Turbine à gaz

(30) Priorität: 11.11.2002 EP 02025194
(43) Veröffentlichungstag der Anmeldung: 12.05.2004
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 379 880
- DE-A- 2 852 057
- GB-A- 766 883

## Beschreibung

Die Erfindung betrifft eine Turbine gemäß dem Oberbegriff des Anspruchs 1.

Aus der DE 28 52 057 ist eine gekühlte Gasturbine bekannt, in der die dem Verdichter entnommene Kühlluft mittels Wassereinspritzung gekühlt wird. Dazu weist die Gasturbine ein Wasserrohr auf, welches in einer Wassersprühkammer endet. Die Wassersprühkammer wird vom Rotor einerseits und von einer den Rotor umgreifenden feststehenden Wand andererseits radial begrenzt. Das eingesprühte Wasser zerstäubt in der Wassersprühkammer in kleine Wassertropfen, die dort nur teilweise verdampfen. Dabei wird der Rotor gekühlt. Die gekühlte Kühlluft wird dann weiter zu den Laufschaufeln der vorderen Turbinenstufen geführt. Die in der Kühlluft verbliebenen Wassertropfen verdampfen nun in der Laufschaufel, um dort die Temperatur der Kühlluft niedrig zu halten.

Die Wassertropfen können bei ihrem Weg entlang des Rotors und in der Schaufel zu Korrosion und Verschleiß führen.

Zudem benetzen die Wassertropfen teilweise die Innenseiten der Schaufelwände. Dort entstehen dann besonders gut gekühlte Bereiche der Schaufelwände, die an nicht benetze und somit geringer gekühlte Bereich angrenzen. An den Übergängen dieser Bereiche kann sich ein deutlicher Temperaturgradient im Wandmaterial ausbilden, der dann zu thermischen Spannungen führt. Dies kann die Lebensdauer der Schaufel reduzieren.

Des Weiteren ist aus der EP 0 447 886 A1 eine axialdurchströmte gekühlte Gasturbine mit einem Verdichter bekannt. Die Gasturbine weist eine Turbinenstufe auf, deren in Ringen hintereinander angeordnete Leit- und Laufschaufeln mittels Kühlluft gekühlt werden. Dazu wird verdichtete Luft als Kühlmittel hinter der Laufreihe der letzten Verdichterstufe entnommen und am Rotor entlang geführt, der dabei konvektiv gekühlt wird. Die Kühlluft wird dann der in Kühlstromrichtung dem Rotor nachgeschalteten Turbinenstufe zugeführt.

Zwar behandelt die EP 0 447 886 A1 keine wassergekühlte und somit korrosionsbehaftete Turbine, jedoch besteht bei erhöhten Drücken im Verdichter, die durch eine Veränderung der Umgebungstemperatur und des Umgebungsdrucks hervorgerufen werden, die Gefahr der Überhitzung der Rotorteile, und zwar im Bereich des Verdichterausgangs bis zur Turbine. Diese Überhitzung des Rotors ist mit unerwünschten Wärmeausdehnungen und/oder mechanischen Spannungen verbunden, die zu Verschleiß führen können.

Eine weitere gekühlte Gasturbine gemäß den Stand der Technik ist aus GB-A-766 883 bekannt.

Die Aufgabe der Erfindung ist es, den Verschleiß der Turbine zu verringern und die Lebensdauer der Komponenten zu erhöhen.

Die Aufgabe wird durch die Merkmale des Anspruchs 1 gelöst. Vorteilhafte Ausgestaltungen der Turbine sind in den Unteransprüchen gegeben.

Die Lösung sieht vor, dass der Kanal außerhalb des Rotors sich erstreckt und dass die Flüssigkeit in einem verdichternahen Bereich in den Kanal einbringbar ist. Durch das Verdampfen der Flüssigkeit im Kanal wird dem Kühlmittel die Verdampfungswärme entzogen und somit gekühlt. Damit der Verdampfungsprozess so ablaufen kann, dass die eingebrachte Flüssigkeit vollständig und nur im Kanalraum verdampft, erfolgt die Einbringung von Flüssigkeit im verdichternahen Bereich des Kanals, wobei der Kanalraum so lang und so groß gewählt ist, dass die Verdampfung grundsätzlich immer gewährleistet ist. Das gekühlte Kühlmittel ist dann vor dem Verlassen des Kanals frei von Wassertropfen, so dass eine Benetzung der Schaufelinnenwände mit Wassertropfen vermieden wird. Die durch die Wasserbenetzungen bedingte Korrosion tritt nicht auf und ein deutlicher Temperaturgradient im Wandmaterial der Schaufel wird verhindert. Zudem kann durch die Kühlung Kühlmittel eingespart werden, welches dem allgemeinen Bestreben, den Wirkungsgrad der Turbine zu erhöhen, dient.

Der zwischen Verdichter und Turbinenteil befindliche Abschnitt des Rotors wird vor Korrosion geschützt, indem der Kanal außerhalb des Rotors vorgesehen ist. Der Kontakt von Wassertropfen mit dem Rotor wird so vermieden.

Ferner folgt dem Kanal stromab ein im Rotor angeordnetes Kühlkanalsystem, welches den Kanal mit den Kühlkanälen der Schaufeln verbindet. Zum Schutz des Kühlkanalsystems und des Rotors muss die Kühlluft frei von Wassertropfen sein, wenn sie den Kanal verlässt. Andernfalls könnte es zu Korrosion am Rotor kommen.

Der Kanal verläuft entlang des Rotors und kühlt diesen. Dadurch wird eine unzulässige Erwärmung des Rotors verhindert, so dass die durch die Temperaturaufnahme auftretenden axialen und radialen Dehnungen des Rotors innerhalb der vorgegebenen Grenzen bleiben. Berührungen der Enden des Rotors mit dem Gehäuse oder unvorhergesehene axiale Druckspannungen an den Lagern des Rotors werden somit vermieden. Daraus resultiert ein verschleißarmer Betrieb der Turbine.

Besonders vorteilhaft ist die Ausgestaltung, bei der der Kanal ein koaxial zum Rotor ausgebildeter und von dem Kühlmittel durchströmter Ringkanal ist. Die der Brennkammer zugewandte radial äußere Kanalwand ist dabei drehfest befestigt. Eine Erwärmung des Kanals kann vermieden werden, wenn den Kanal gegenüber der Brennkammer thermisch isoliert ist.

In einer vorteilhaften Weiterbildung ist die drehfeste innere Kanalwand zur Oberfläche des Rotors beabstandet. Somit ist eine räumliche und dichte Trennung von dem Kanalraum, in dem der Verdampfungsprozess abläuft, und der Oberfläche des Rotors gegeben, wodurch der Rotor gegen Korrosion geschützt wird.

In einem Ringspalt zwischen der Rotoroberfläche und der drehfesten inneren Kanalwand entstehen beim Betrieb der Turbine durch den sich drehenden Rotor Luftwirbel, die zu einem höheren Wärmeübergang führen. Daher kann der Rotor trotz des Ringspalts einfach durch das Kühlmittel konvektiv gekühlt werden. Da dieser axiale Abschnitt des Rotors radial zwischen der heißen Brennkammer und der Drehachse angeordnet ist, ist eine wirksame Kühlung des Rotors von Bedeutung.

Besonders vorteilhaft ist es, wenn die Flüssigkeit in den Ringkanal mittels einer Düse eingebracht wird. Die Düse zerstäubt die Flüssigkeit in eine Vielzahl kleiner Tropfen, die dann durch ihren Aggregatszustandwechsel von flüssig zu gasförmig der Umgebung Wärme entziehen und folglich so das Kühlmittel abkühlen. Je kleiner dabei die Tropfen sind, um so leichter verdampft das Wasser im Ringkanal und um so eher sind alle Tropfen verdampft.

Vorteilhafterweise ist die Flüssigkeit Wasser, insbesondere destilliertes Wasser.

Zweckmäßigerweise ist das Kühlmittel die Verdichteraustrittsluft. Die vom Verdichter bereitgestellte verdichtete Luft und somit der im Ringkanal einströmende Kühlluftstrom weist üblicherweise eine Temperatur von ungefähr 400 °C auf, so dass der Aggregatszustandwechsel des eingedüsten Wassers dadurch unterstützt ablaufen kann.

Hinter dem Verdichteraustritt, im Diffusor, wird ein größerer Anteil der verdichteten Luft, der Verdichtermassenstrom, zum Brenner umgelenkt und ein geringerer Anteil der verdichteten Luft wird als Kühlluft weiter nach innen zum Rotor hin abgelenkt und zum Ringkanal geführt. Von besonderem Vorteil ist daher die Ausgestaltung, bei der ein Abstützen der dem Rotor zugewandten Komponenten mittels Diffusorrippen erfolgt. Sie sind einerseits am Stator der Turbine befestigt und erstrecken sich durch den Strömungskanal. Andererseits halten sie die Komponenten des Strömungskanals, die dem Rotor zugewandt sind.

Der ringförmige und zu der Drehachse des Rotors symmetrische Aufbau der Turbine erfordert, dass die von außerhalb der Turbine bereitgestellte Flüssigkeit, welche im Ringkanal zur Erzeugung von Verdampfungskälte eingebracht wird, den Verdichtermassenstrom kreuzen muss. Hierzu sind die den Strömungskanal kreuzenden Diffusorrippen hohl ausgeführt, so dass in ihnen das Rohr für die Flüssigkeit verläuft. Dabei kommuniziert das Rohr statorseitig mit einer Flüssigkeitsquelle und rotorseitig mit der Düse, die in den Ringkanal hineinragt. Die zur Kühlung des Kühlmittels benötigte Flüssigkeit kreuzt so den Verdichtermassenstrom, ohne diesen weiter zu beeinträchtigen. Alternativ könnte der dem Verdichter entnommene Anteil der verdichteten Luft, die zur Kühlung verwendet wird, extern mittels eines Wärmetauschers gekühlt werden. Danach müsste die extern gekühlte Kühlluft den Verdichtermassenstrom kreuzen, um zum innenliegenden Rotor zu gelangen. Jedoch müsste dabei ein wesentlich größerer Volumenstrom den Verdichtermassenstrom kreuzen als bei der vorgeschlagenen Lösung. Daher ist das Einbringen einer Flüssigkeit in den Ringkanal, welches durch ein Rohr geringen Querschnitts durch die Diffusorrippen geführt wird, wesentlich einfacher. Anstelle der hohlen Diffusorrippen könnte das Rohr auch durch hohle Stützrippen, die die Kanalwände am Innengehäuse abstützten, geführt werden.

Die Erfindung wird anhand von Zeichnungen erläutert. Dabei zeigen die Figuren:
- Fig. 1: einen Längsteilschnitt durch eine Gasturbine und
- Fig. 2: einen schematischen Längsschnitt durch den Rotor, die Brennkammer, die erste Turbinenstufe und den Diffusor der Gasturbine gemäß Fig. 1.

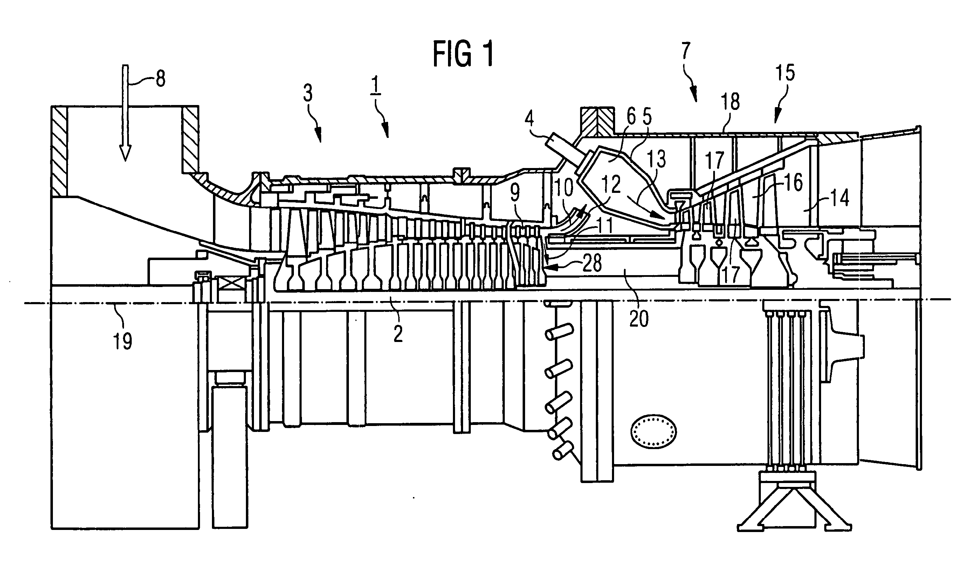

Die Fig. 1 zeigt einen Längsteilschnitt durch eine als stationäre Gasturbine ausgebildete Turbine 1, die einen Rotor 2, einen Verdichter 3, einen Brenner 4, eine Ringbrennkammer 5 mit einem Verbrennungsraum 6 und einen Turbinenteil 7 aufweist.

Während des Betriebs der Turbine 1 saugt ein Ende des Verdichters 3 Luft 8 an, die dann am anderen Ende als verdichtete Luft 9 bereitgestellt wird. Diese wird dann in einen Luftmassenstrom 10 und in einen Kühlluftstrom 11 aufgeteilt. Der Kühlluftstrom 11 wird zur Kühlung des Turbinenteils 7 und des Rotors 3 verwendet, wohingegen der Luftmassenstrom 10 zuerst zur Kühlung der Ringbrennkammer 5 und dann zur Verbrennung genutzt wird. Dazu wird der Luftmassenstrom 10 nach dem Austreten aus dem Verdichter 3 von einem Diffusor 12 in Richtung der Ringbrennkammer 5 umgeleitet und von da aus weiter zum Brenner 4 geführt. Anschließend erfolgt im Brenner 4 die Vermischung des Luftmassenstroms 10 mit einem Brennmittel, welches dann im Verbrennungsraum 6 der Ringbrennkammer 5 verbrannt wird. Das heiße Arbeitsmedium 13 strömt entlang eines Heißgaskanals 14 vorbei an Turbinenstufen 15. Jede Turbinenstufe 15 wird dabei aus zwei hintereinandergeschalteten Schaufelringen gebildet. In Strömungsrichtung des Arbeitsmediums 13 gesehen folgt einer aus Leitschaufeln 16 gebildeten Leitschaufelreihe eine aus Laufschaufeln 17 gebildete Reihe. An den Laufschaufeln 17, die im Gegensatz zu den am Turbinengehäuse 18 befestigten Leitschaufeln 16 am Rotor 2 montiert sind, entspannt sich das Arbeitsmedium 13 impulsartig und treibt somit einen mit dem Rotor 2 verbundenen nicht dargestellten Generator und den Verdichter 3 an.

Der Ringbrennkammer 5 folgt radial weiter innenliegend ein den Rotor 2 umgreifenden Ringkanal 20.

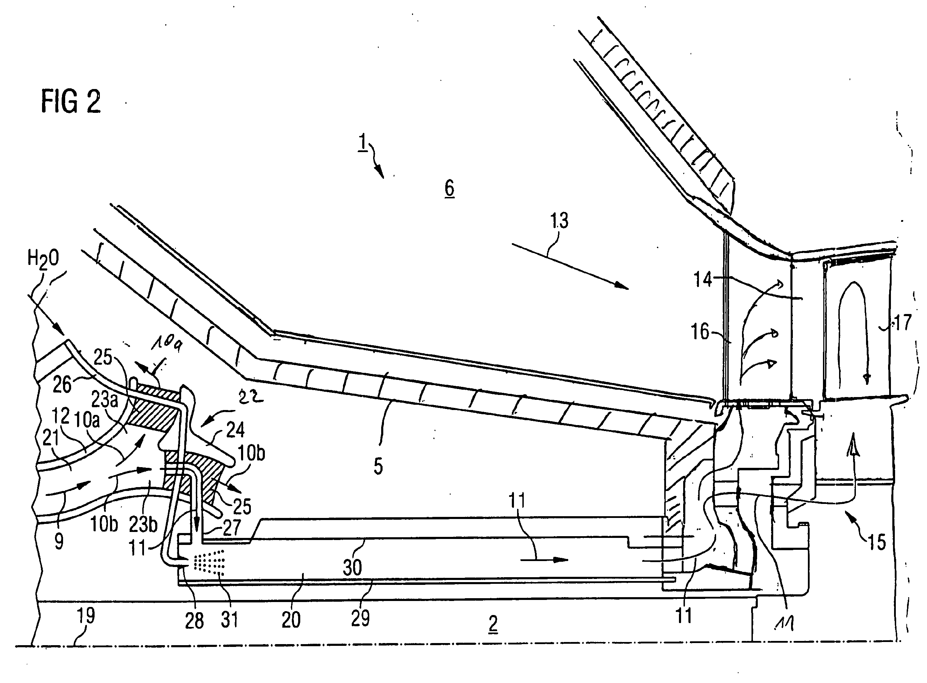

Fig. 2 zeigt in einen schematischen Längsschnitt durch den Rotor 2, einen Verdichteraustritt 21, den Diffusor 12, die Ringbrennkammer 5 und die erste Turbinenstufe 15 der Turbine 1.

Die Ringbrennkammer 5 mit dem Verbrennungsraum 6 ist teilweise dargestellt, in der Fig. 2 oberhalb des Diffusors 12. Der Verbrennungsraum 6 kommuniziert mit dem Heißgaskanal 14, in dem die Leit- und Laufschaufeln 16, 17 angeordnet sind.

Dem Verdichter 3, in Fig. 2 nicht dargestellt, ist der ringförmige Verdichteraustritt 21 strömungstechnisch nachgeschaltet, der weiter stromab in den Diffusor 12 mündet. Im Diffusor 12 erfolgt eine Aufteilung des Strömungskanals für die verdichtete Luft 9 mittels eines Strömungskeils 24 in zwei Teilkanäle 23a, 23b (Y-artige Kanalgabelung 22). Der Strömungskeil 24 umgreift den Rotor 2 als Ring und ist dabei mit dem Diffusor 12 über mehrere Diffusorrippen 25 verbunden; er wird somit von diesen fest gehalten. Jeder Teilkanal 23a, 23b wird also von mehreren Diffusorrippen 25 gekreuzt.

Die Diffusorrippe 25 ist hohl ausgebildet, wobei ein Rohr 26 durch sie verläuft. Das Rohr 26 kommuniziert einerseits mit einer nicht gezeigten Wasserquelle und andererseits über weitere Verbindungsrohre mit einer am verdichterseitigen Ende des Ringkanals 20 angeordneten Düse 28.

In den Teilkanal 23b ragt nach Art eines Periskops ein Kühlluftentnahmerohr 27 hinein, welches mit dem Ende des Ringkanals 20 kommuniziert, dass dem Verdichter 3 zugewandt ist. Der Ringkanal 20 umgreift den Rotor 2 ringförmig, wobei eine Innenwand 29 des Ringkanals 20 den Rotor 2 beabstandet umgreift. Die radial außenliegende Kanalwand des Ringkanals 20 wird durch eine Außenwand 30 gebildet, die zur Innenwand 29 beabstandet ist und sich in Axialrichtung des Rotors 2 erstreckt. Die Außenwand 30 isoliert dabei den Ringkanal 20 thermisch gegenüber der Ringbrennkammer 5. Der Ringkanal 20 ist somit ringförmig um den Rotor 2 ausgebildet und erstreckt sich in Längsrichtung parallel zu diesem.

Während des Betriebs der Turbine 1 verdichtet der Verdichter 3 die von ihm angesaugte Luft 8, die dann durch den Verdichteraustritt 21 in den Diffusor 12 strömt. Im Diffusor 12 wird die Luft 9 durch den ringförmigen Strömungskeil 24 in zwei Luftmassenströme 10a, 10b aufgeteilt, wobei beide Ströme 10a, 10b zur Kühlung der Ringbrennkammer 5 und anschließend zur Verbrennung des Brennmittels verwendet werden. Ein Teil des Luftmassenstroms 10b strömt in das Kühlluftentnahmerohr 27 hinein und wird somit diesem entnommen. Dieser Teil wird so umgelenkt, dass er anschließend in den Ringkanal 20 hineinströmt und dort als Kühlluftstrom 11 strömt.

Das Wasser strömt von der Wasserquelle durch Verbindungsrohre zum Rohr 26 und von dort aus weiter zur Düse 28. Durch die Düse 28 wird das Wasser in den Ringkanal 20 eingedüst und dabei in eine Vielzahl von Wasserperlen 31 zerstäubt. Diese verdampfen aufgrund des ausreichend großen Volumens des Ringkanals 20 vollständig in diesem, wobei der Umgebung Wärme entzogen wird, so dass der Kühlluftstrom 11 in dem Ringkanal 20 gekühlt wird. Ein aufgrund hoher Drücke im Verdichter 3 zu heißer Kühlluftstrom 11 wird so in den vorgegebenen Temperaturbereich zurückgekühlt. Durch eine Änderungen der eingedüsten Wassermenge ist die Temperatur des Kühlluftstroms 11 einstellbar.

Der Kühlluftstrom 11 strömt entlang der Innenwand 29 durch den Ringkanal 20 und kühlt dabei den Rotor 2 konvektiv. In dem Ringspalt zwischen der feststehenden Innenwand 29 und rotierenden Rotoroberfläche entstehen Luftwirbel, die den Wärmeübergang vom Rotor zur Innenwand 29 begünstigen. Am turbinenseitigen Ende des Ringkanals 20 mündet der dann wassertropfenfreie Kühlluftstrom 11 in ein im Rotor 2 befindliches Kühlkanalsystem, welches den Kühlluftstrom 11 weiter zu den Leitschaufeln 16 und zu den Laufschaufeln 17 der ersten Turbinenstufe 15 führt. Diese werden dann mit dem gekühlten Kühlluftstrom 11 gekühlt, ohne das durch Wassertropfen Korrosion oder thermische Spannungen hervorgerufen werden.

## Patentansprüche

1. Turbine (1), insbesondere eine Gasturbine, die entlang eines drehgelagerten rotationssymmetrischen Rotors (2) einen Verdichter (3), eine Brennkammer (5) und ein aus mehreren Turbinenstufen (15) gebildeten Turbinenteil (7) aufweist, bei der jede Turbinenstufe (15) miteinander zusammenwirkende Laufschaufeln (17) und Leitschaufeln (16) umfasst, die von einem heißen Arbeitsmedium (13) umströmbar sind,
mit einem von dem Verdichter (3) bereitgestellten Kühlmittel zur Kühlung der Schaufeln (16, 17), welches in einem Kanal entlang des Rotors (2) vom Verdichter (3) zum Turbinenteil (7) strömbar ist und in welches zur Kühlung eine Flüssigkeit einbringbar ist, wobei
der Kanal sich außerhalb des Rotors (2) erstreckt, **dadurch gekennzeichnet dass** die Flüssigkeit in einem verdichternahen Bereich in den Kanal einbringbar ist.

2. Turbine (1) nach Anspruch 1,
**dadurch gekennzeichnet,**
**dass** der Kanal entlang des Rotors (2) verläuft und dieser vom Kühlmittel kühlbar ist.

3. Turbine (1) nach Anspruch 1 oder 2,
**dadurch gekennzeichnet,**
**dass** der Kanal ein koaxial zum Rotor (2) ausgebildeter und von dem Kühlmittel durchströmter Ringkanal (20) ist,
dessen der Brennkammer (5) zugewandte radial äußere Kanalwand (30) drehfest ist und den Kanal gegenüber der Brennkammer (5) thermisch isoliert.

4. Turbine (1) nach einem der Ansprüche 1 bis 3,
**dadurch gekennzeichnet,**
**dass** die drehfeste radial innere Kanalwand zur Oberfläche des Rotors (2) beabstandet ist.

5. Turbine (1) nach einem der Ansprüche 1 bis 4,
**dadurch gekennzeichnet,**
**dass** die Flüssigkeit in den Ringkanal (20) mittels einer Düse (28) einbringbar ist.

6. Turbine (1) nach einem der Ansprüche 1 bis 5,
**dadurch gekennzeichnet,**
**dass** die Flüssigkeit Wasser, insbesondere destilliertes Wasser, ist.

7. Turbine (1) nach einem der Ansprüche 1 bis 6,
**dadurch gekennzeichnet,**
**dass** das Kühlmittel Verdichteraustrittsluft ist.

8. Turbine (1) nach einem der Ansprüche 1 bis 7,
**dadurch gekennzeichnet,**
**dass** in einem dem Verdichteraustritt in Strömungsrichtung der Verdichterluft nachgeschalteten Strömungskanal eine diesen durchquerende Diffusorrippe (25) angeordnet ist.

9. Turbine (1) nach Anspruch 8,
**dadurch gekennzeichnet,**
**dass** das radial äußere Ende der Diffusorrippe (25) am Stator der Turbine (1) befestigt ist und das dem äußeren Ende gegenüberliegende radial innere Ende dem Rotor (2) zugewandt ist.

10. Turbine (1) nach einem der Ansprüche 1 bis 9,
**dadurch gekennzeichnet,**
**dass** die Innenwand (29) und die äußere Kanalwand (30) mittels Stützrippen an einem Innengehäuse der Turbine (1) abgestützt sind.

11. Turbine (1) nach Anspruch 9 oder 10,
**dadurch gekennzeichnet,**
**dass** zumindest eine Rippe hohl ausgebildet ist und in ihr ein Rohr (26) verläuft, welches statorseitig mit einer Flüssigkeitsquelle und rotorseitig mit der zur Einbringung der Flüssigkeit im Ringkanal verwendeten Düse (28) kommuniziert.

12. Gasturbine mit einer Turbine (1) nach einem der vorhergehenden Ansprüche.

## Claims

1. Turbine (1), in particular a gas turbine, which has along a rotary-mounted rotationally symmetrical rotor (2) a compressor (3), a combustion chamber (5) and a turbine part (7) formed from a plurality of turbine stages (15), in which turbine each turbine stage (15) comprises moving blades (17) and guide blades (16) which co-operate with one another and around which a hot working medium (13) is capable of flowing, with a coolant for cooling the blades (16, 17) which is provided by the compressor (3) and is capable of flowing in a duct along the rotor (2) from the compressor (3) to the turbine part (7) and into which a liquid can be introduced for cooling purposes, the duct extending outside the rotor (2), **characterized in that** the liquid can be introduced into the duct in a near-compressor region.

2. Turbine (1) according to Claim 1, **characterized in that** the duct runs along the rotor (2) and the latter can be cooled by the coolant.

3. Turbine (1) according to Claim 1 or 2, **characterized in that** the duct is an annular duct (20) which is formed coaxially to the rotor (2) and through which the coolant flows and of which the radially outer duct wall (30) facing the combustion chamber (5) is rotationally fixed and thermally insulates the duct with respect to the combustion chamber (5).

4. Turbine (1) according to one of Claims 1 to 3, **characterized in that** the rotationally fixed radially inner duct wall is spaced apart from the surface of the rotor (2).

5. Turbine (1) according to one of Claims 1 to 4, **characterized in that** the liquid can be introduced into the annular duct (20) by means of a nozzle (28).

6. Turbine (1) according to one of Claims 1 to 5, **characterized in that** the liquid is water, in particular distilled water.

7. Turbine (1) according to one of Claims 1 to 6, **characterized in that** the coolant is compressor outlet air.

8. Turbine (1) according to one of Claims 1 to 7, **characterized in that** a flow duct following the compressor outlet in the direction of flow of the compressor air has arranged in it a diffuser rib (25) passing across it.

9. Turbine (1) according to Claim 8, **characterized in that** the radially outer end of the diffuser rib (25) is fastened to the stator of the turbine (1), and the radially inner end lying opposite the outer end faces the rotor (2).

10. Turbine (1) according to one of Claims 1 to 9, **characterized in that** the inner wall (29) and the outer duct wall (30) are supported on an inner casing of the turbine (1) by means of supporting ribs.

11. Turbine (1) according to Claim 9 or 10, **characterized in that** at least one rib is designed to be hollow, and in it runs a pipe (26) which communicates on the stator side with a liquid source and on the rotor side with the nozzle (28) used for introducing the liquid into the annular duct.

12. Gas turbine having a turbine (1) according to one of the preceding claims.

## Revendications

1. Turbine ( 1 ), notamment turbine à gaz, qui a, le long d'un rotor ( 2 ) révolution monté tournant, un compresseur ( 3 ), une chambre de combustion ( 5 ) et une partie ( 7 ) de turbine formée de plusieurs étages ( 15 ) de turbine, dans laquelle chaque étage ( 15 ) de turbine comprend des aubes ( 17 ) mobiles et des aubes ( 16 ) directrices qui coopèrent entre elles et autour desquelles passe un fluide ( 13 ) chaud de travail,
comprenant un fluide de refroidissement, qui est mis à disposition par le compresseur ( 3 ), qui est destiné à refroidir les aubes ( 16, 17 ), qui peut passer du compresseur ( 3 ) à une partie ( 7 ) de turbine dans un canal le long du rotor ( 2 ) et dans lequel peut être introduit un liquide pour le refroidissement, dans laquelle
le canal s'étend à l'extérieur du rotor ( 2 ), **caractérisée en ce que** le liquide peut être introduit dans le canal dans une zone proche du compresseur.

2. Turbine ( 1 ) suivant la revendication 1,
**caractérisée**
**en ce que** le canal s'étend le long du rotor ( 2 ) et celui-ci peut être refroidi par le fluide de refroidissement.

3. Turbine ( 1 ) suivant la revendication 1 ou 2,
**caractérisée**
**en ce que** le canal est un canal ( 20 ) annulaire qui est coaxial au rotor ( 2 ), qui est parcouru par le fluide de refroidissement et dont la paroi ( 30 ) extérieure radialement est tournée vers la chambre de combustion ( 5 ), est fixe en rotation et isole thermiquement le canal par rapport à la chambre de combustion ( 5 ).

4. Turbine ( 1 ) suivant l'une des revendications 1 à 3,
**caractérisée**
**en ce que** la paroi intérieure radialement et fixe en rotation du canal est à distance de la surface ( 2 ) du rotor.

5. Turbine ( 1 ) suivant l'une des revendications 1 à 4,
**caractérisée**
**en ce que** le liquide peut être introduit dans le canal ( 20 ) annulaire au moyen d'une buse ( 28 ).

6. Turbine ( 1 ) suivant l'une des revendications 1 à 5,
**caractérisée**
**en ce que** le liquide est de l'eau, notamment de l'eau distillée.

7. Turbine ( 1 ) suivant l'une des revendications 1 à 6,
**caractérisée**
**en ce que** le fluide de refroidissement est de l'air qui sort du compresseur.

8. Turbine ( 1 ) suivant l'une des revendications 1 à 7,
**caractérisée**
**en ce que**, dans un canal d'écoulement en aval dans la direction d'écoulement de l'air du compresseur de la sortie du compresseur, est disposée une nervure ( 25 ) traversante formant diffuseur.

9. Turbine ( 1 ) suivant la revendication 8,
**caractérisée**
**en ce que** l'extrémité extérieure radialement de la nervure ( 25 ) formant diffuseur est fixée au stator de la turbine ( 1 ) et l'extrémité intérieure radialement opposée à l'extrémité extérieure est tournée vers le rotor ( 2 ).

10. Turbine ( 1 ) suivant l'une des revendications 1 à 9,
**caractérisée**
**en ce que** la paroi ( 29 ) intérieure et la paroi ( 30 ) extérieure du canal sont soutenues au moyen de nervures d'appui sur un carter intérieur de la turbine ( 1 ).

11. Turbine ( 1 ) suivant la revendication 9 ou 10,
**caractérisée**
**en ce qu'**au moins une nervure est creuse et en elle s'étend un tuyau ( 26 ) qui communique du côté du stator avec une source de liquide et du côté du rotor avec la buse ( 28 ) utilisée dans le canal annulaire pour l'introduction du liquide.

12. Turbine à gaz ayant une turbine ( 1 ) suivant l'une des revendications précédentes
